# EUROPÄISCHE PATENTANMELDUNG

(11) **EP 3 639 906 A1**
(43) Veröffentlichungstag der Anmeldung: **22.04.2020**
(21) Anmeldenummer: 19203116.9
(22) Anmeldetag: 14.10.2019
(51) Int. Cl.: B01D 53/06, B01D 53/26, E03B 3/28

(54) **VERFAHREN ZUM GEWINNEN VON WASSER UND WASSERGEWINNUNGSVORRICHTUNG**

(30) Priorität: 17.10.2018 DE 102018125792
(71) Anmelder: Hochschule Karlsruhe Technik und Wirtschaft, 76133 Karlsruhe (DE)
(72) Erfinder: Dr.-Ing. Lenz, Bernhard, 76593 Gernsbach (DE)
(74) Vertreter: Habermann Intellectual Property Partnerschaft von Patentanwälten mbB

(57) **Zusammenfassung**

Bei einem mit einer Wassergewinnungsvorrichtung durchgeführten Verfahren zum Gewinnen von Wasser aus einem Eingangsluftstrom (1) werden der Eingangsluftstrom (1) und ein Feuchtluftstrom (3) durch ein Sorptionselement (2) zur Sorption von Wasser aus dem Eingangsluftstrom (1) geführt, wobei das Sorptionselement (2) Feuchtigkeit aus dem Eingangsluftstrom (1) aufnimmt und an den das Sorptionselement (2) durchströmenden Feuchtluftstrom (3) abgibt. Der Feuchtluftstrom (3) wird nach dem Sorptionselement (2) durch eine erste Kondensationsstufe (4) geführt, mit welcher Wasser aus dem Feuchtluftstrom (3) entzogen wird. Der Eingangsluftstrom (1) wird vor dem Durchströmen des Sorptionselements (2) mit einem Kompressor (6) komprimiert, dem komprimierten Eingangsluftstrom (1) wird Wärme entzogen und der komprimierte Eingangsluftstrom (1) dadurch abgekühlt, und Der komprimierte abgekühlte Eingangsluftstrom (1) wird mit einer Expansionsvorrichtung (8) dekomprimiert und dadurch noch weiter abgekühlt, bevor er das Sorptionselement (2) durchströmt.

## Beschreibung

Die Erfindung betrifft ein Verfahren zur Gewinnung von Wasser aus einem Eingangsluftstrom sowie eine Wassergewinnungsvorrichtung, mit welcher das erfindungsgemäße Verfahren durchgeführt werden kann. Dabei werden der Eingangsluftstrom, aus welchem Wasser entzogen und dadurch gewonnen werden soll, und ein Feuchtluftstrom durch ein Sorptionselement zur Sorption von Wasser aus dem Eingangsluftstrom geführt, wobei das Sorptionselement Feuchtigkeit aus dem Eingangsluftstrom aufnimmt und an den das Sorptionselement durchströmenden Feuchtluftstrom abgibt, und wobei der Feuchtluftstrom nach dem Sorptionselement durch eine erste Kondensationsstufe geführt wird, mit welcher Wasser aus dem Feuchtluftstrom entzogen wird.

Vorrichtungen und Verfahren zur Gewinnung von Wasser aus einem üblicherweise aus der Umgebungsluft gewonnenen Eingangsluftstrom sind aus dem Stand der Technik bekannt. Insbesondere in heißen und sonnigen Regionen reichen natürliche Wasservorkommen und Wasserquellen oftmals nicht aus, um den Wasserbedarf in Siedlungen oder für die Landwirtschaft zu decken. Es wird deshalb versucht, mit geeigneten Wassergewinnungsvorrichtungen ein Anteil der in der Umgebungsluft enthaltenen Feuchtigkeit für die Wassergewinnung zu nutzen und der Umgebungsluft zu entziehen. In heißen und sonnigen Regionen stehen zudem oftmals kostengünstige externe Wärmequellen oder Energiequellen zur Verfügung, die für die Wassergewinnung genutzt werden können. Gleichwohl ist es für einen wirtschaftlich sinnvollen Betrieb derartiger Wassergewinnungsvorrichtungen, die der Umgebungsluft Feuchtigkeit entziehen können, von großer Bedeutung, dass das Verfahren zur Wassergewinnung möglichst effizient durchgeführt werden kann und dass die entsprechenden Wassergewinnungsvorrichtungen wirtschaftlich sinnvoll hergestellt und betrieben werden können.

Aus den Druckschriften US 7,251,954 B2, US 2013/0186118 A1 oder US 2007/0028769 A1 sind jeweils verschiedene Ausgestaltungen einer Wassergewinnungsvorrichtung bekannt, bei denen ein Sorptionsrad als Sorptionselement verwendet wird, um dem Eingangsluftstrom Feuchtigkeit zu entziehen. Der aus der Umgebungsluft angesaugte Eingangsluftstrom durchströmt einen Abschnitt des Sorptionsrads. Durch einen Adsorptionsvorgang wird Feuchtigkeit bzw. Wasser aus der Umgebungsluft in dem betreffenden Abschnitt des Sorptionsrads adsorbiert. Das Sorptionsrad dreht sich, so dass das durch den Adsorptionsvorgang in den Abschnitt des Sorptionsrads eingebrachte Wasser in einen Luftstrom verbracht wird, der dann getrennt von der Umgebungsluft den mit Wasser angereicherten Abschnitt des Sorptionsrad durchströmt. Dieser Luftstrom, der die Feuchtigkeit aus dem Sorptionsrad aufnehmen soll, wird zuvor erwärmt, um möglichst viel Wasser aus dem mit Wasser angereicherten Abschnitt des Sorptionsrads aufnehmen zu können. Anschließend wird dieser Feuchtluftstrom einer Kondensationsstufe zugeführt und in dieser Kondensationsstufe dem Feuchtluftstrom Wasser entzogen.

Eine Kondensation des in dem Feuchtluftstrom enthaltenen Wasseranteils setzt voraus, dass die Temperatur des Feuchtluftstroms eine Taupunkttemperatur unterschreitet, mit welcher diejenige Temperatur eines Luftgemischs bezeichnet wird, unterhalb der Wasser aus dem Luftgemisch an Oberflächen kondensiert und sich als Wassertropen an den Oberflächen niederschlägt. Üblicherweise wird die Kondensation dadurch begünstigt, dass die Oberflächen zusätzlich gekühlt werden.

Um in der Kondensationsstufe das Wasser aus dem Feuchtluftstrom abscheiden zu können, muss der Feuchtluftstrom heruntergekühlt werden, wozu externe Energie benötigt wird. Gleichzeitig ist es vorteilhaft, den Feuchtluftstrom vor dem Durchströmen des Sorptionsrads zu erwärmen, um eine möglichst große Wassermenge bei dem Durchströmen des Sorptionsrads aufnehmen zu können. Auch für die Erwärmung des Feuchtluftstroms vor dem Sorptionsrad ist regelmäßig externe Energie notwendig, die zugeführt werden muss. Die Effizienz der Wassergewinnung aus der Umgebungsluft wird bei den aus der Praxis bekannten Wassergewinnungsvorrichtungen durch die energieintensive Erwärmung sowie Abkühlung des Feuchtluftstroms vorgegeben und limitiert.

Durch die Verwendung eines Sorptionsrads oder eines anderen geeigneten Sorptionselements wie beispielsweise eine hygroskopische Flüssigkeit als Absorptionselement ist es möglich, einem Eingangsluftstrom Feuchtigkeit zu entziehen und diese Feuchtigkeit einem davon getrennten Feuchtluftstrom zuzuführen. Während der Eingangsluftstrom, beispielsweise die angesaugte Umgebungsluft, oftmals in Abhängigkeit von der jeweiligen Tageszeit und den Wetterbedingungen stark unterschiedliche Eigenschaften aufweisen kann, können die für die Wassergewinnung relevanten Bedingungen des Feuchtluftstroms regelmäßig einfacher kontrolliert und so vorgegeben werden, dass eine möglichst effiziente Wassergewinnung aus dem Feuchtluftstrom ermöglicht wird.

Der vorliegenden Erfindung liegt die Aufgabe zugrunde, ein Verfahren zur Gewinnung von Wasser aus einem Eingangsluftstrom so auszugestalten, dass eine möglichst effiziente Wassergewinnung ermöglicht wird.

Diese Aufgabe wird erfindungsgemäß dadurch gelöst, dass der Eingangsluftstrom vor dem Durchströmen des Sorptionselements mit einem Kompressor komprimiert wird, dass dem komprimierten Eingangsluftstrom Wärme entzogen und der komprimierte Eingangsluftstrom dadurch abgekühlt wird, und dass der komprimierte abgekühlte Eingangsluftstrom mit einer Expansionsvorrichtung dekomprimiert wird, bevor er das Sorptionselement durchströmt. Die Abgabe von Feuchtigkeit bzw. Wasser aus dem Eingangsluftstrom in das Sorptionselement wird dadurch unterstützt und begünstigt, dass der Eingangsluftstrom vor dem Durchströmen des Sorptionselements abgekühlt wird. Die Abkühlung des Eingangsluftstroms ist jedoch vergleichsweise energieintensiv und führt deshalb nicht ohne weiteres zu einer merklichen Steigerung der Effizienz bei der Durchführung des Verfahrens zur Wassergewinnung. Es hat sich jedoch herausgestellt, dass der Eingangsluftstrom mit einem vergleichsweise geringen Energieaufwand in einer vorteilhaften Weise abgekühlt werden kann, indem der Eingangsluftstrom zunächst komprimiert und dadurch erwärmt wird, dem komprimierten und erwärmten Eingangsluftstrom Wärme entzogen und der komprimierte Eingangsluftstrom dadurch abgekühlt wird und bei der anschließenden Dekomprimierung des komprimierten abgekühlten Eingangsluftstroms eine weitere Abkühlung des Eingangsluftstroms erfolgt, bevor der Eingangsluftstrom dem Sorptionselement zugeführt wird. Der komprimierte Eingangsluftstrom kann im Vergleich zu einem nicht komprimierten Eingangsluftstrom wesentlich effizienter auf eine Temperatur abgekühlt werden, die deutlich geringer als eine Eingangstemperatur des angesaugten und noch nicht komprimierten Eingangsluftstroms ist.

Da der komprimierte Eingangsluftstrom durch den Wärmeentzug, der beispielsweise mit einer geeigneten Wärmeübertragungsvorrichtung durchgeführt werden kann, bereits auf ein mit der Umgebungstemperatur und damit auf ein mit der ursprünglichen Temperatur des Eingangsstroms vergleichbares Temperaturniveau abgekühlt werden kann und mit dieser Temperatur der Expansionsvorrichtung zugeführt wird, kann durch die Dekomprimierung des bereits abgekühlten Eingangsluftstroms eine weitere Abkühlung auf ein Temperaturniveau erfolgen, das deutlich unterhalb der Eingangstemperatur des Eingangsluftstroms liegt. Im Vergleich zu den aus der Praxis bekannten Kühlvorrichtungen kann das erfindungsgemäße Verfahren sehr energieeffizient durchgeführt werden und ermöglicht eine deutliche und vorteilhafte Abkühlung des Eingangsluftstroms unter die Eingangstemperatur des Eingangsluftstroms. Für den Betrieb eines geeigneten Kompressors und einer geeigneten Dekomprimierungsvorrichtung ist ein zusätzlicher Energieaufwand erforderlich. Dieser zusätzliche Energieaufwand ist jedoch wesentlich geringer als die Energieeinsparung, die bei dem erfindungsgemäßen Abkühlen des Eingangsluftstroms erzielt werden kann.

Gemäß einer vorteilhaften Ausgestaltung des erfindungsgemäßen Verfahrens ist vorgesehen, dass der komprimierte Eingangsluftstrom mit der Expansionsvorrichtung so dekomprimiert wird, dass der Druck des dekomprimierten Eingangsluftstroms nicht größer als der Druck des Eingangsluftstroms vor dem Komprimieren mit dem Kompressor ist. Für viele Anwendungsbereiche dürfte es zweckmäßig und vorteilhaft sein, dass der Druck des dekomprimierten Eingangsluftstroms dem Druck des Eingangsluftstroms vor dem Komprimieren mit dem Kompressor und damit üblicherweise dem Umgebungsdruck entspricht, aus welchem der Eingangsluftstrom in vielen Fällen angesaugt wird.

In Abhängigkeit von den jeweiligen Umgebungsbedingungen und den Möglichkeiten für eine kostengünstige Zuführung externer Energie kann es auch zweckmäßig sein und den aus dem Eingangsluftstrom entnehmbaren Wasseranteil steigern, dass der Druck des dekomprimierten Eingangsluftstroms geringer als der Druck des noch nicht komprimierten Eingangsluftstroms ist und deshalb der dekomprimierte Eingangsluftstrom besonders stark abgekühlt wird, bevor er das Sorptionselement durchströmt. In Abhängigkeit von dem Druck des dekomprimierten Eingangsluftstroms bei der Durchströmung des Sorptionselements kann es zweckmäßig oder sogar notwendig werden, mit Hilfe einer geeigneten Strömungserzeugungsvorrichtung das Durchströmen des Sorptionselements mit dem dekomprimierten und stark abgekühlten Eingangsluftstrom zu unterstützen.

Im Hinblick auf eine möglichst effiziente Abkühlung des Eingangsluftstroms ist es optional vorgesehen, dass der Eingangsluftstrom mit dem Kompressor auf einen Druck von mehr als dem 1,5-fachen, vorzugsweise von mehr als dem 1,7-fachen und besonders vorzugsweise von mehr als dem 2-fachen des Drucks des Eingangsluftstroms komprimiert wird. Im Sinne der vorliegenden Erfindung bezeichnet Kompressor einen beliebigen Verdichter, mit dem eine Komprimierung bzw. Druckerhöhung eines Luftstroms bewirkt werden kann. Bei dem Kompressor kann es sich erfindungsgemäß um einen durch einen Verbrennungsmotor oder um einen durch einen Elektromotor angetriebenen Kompressor handeln. Ein Kompressor kann aber beispielsweise auch durch aus der Wärmegewinnungsvorrichtung ausgekoppelte Wärmeenergie oder durch Solarenergie betrieben werden, die insbesondere in heißen und sonnigen Regionen oftmals im Überfluss zur Verfügung steht. Geeignete Kompressoren können beispielsweise Rotationsverdichter, insbesondere Schraubenverdichter oder Turboverdichter sein. Es können auch zyklisch arbeitende Kompressoren wie beispielsweise Hubkolbenverdichter eingesetzt werden.

Bei dem Kompressor handelt es sich erfindungsgemäß nicht um ein Gebläse oder um einen Ventilator, mit welchem im Wesentlichen eine Luftströmung aufrechterhalten oder verstärkt werden soll und dabei eine geringe Verdichtung des Luftstroms als Nebeneffekt bewirkt wird. Im Unterschied zu herkömmlichen Gebläsen oder Ventilatoren wird mit dem erfindungsgemäßen Kompressor zwischen einer Ansaugseite und einer Druckseite des Kompressors ein als Druckverhältnis bezeichneter Quotient von Enddruck durch Saugdruck von mehr als 1,3 erzielt. Es hat sich jedoch als vorteilhaft herausgestellt, dass der Eingangsluftstrom mit dem Kompressor auf einen Druck von mehr als dem 1,5-fachen oder dem 1,7-fachen des Drucks des Eingangsluftstroms komprimiert wird. Insbesondere dann, wenn die für den Betrieb des Kompressors erforderliche Energie kostengünstig beispielsweise durch die Nutzung von Solarenergie zur Verfügung gestellt werden kann, ist auch eine Kompression des Eingangsluftstroms auf einen Druck von mehr als dem 2-fachen des Drucks des Eingangsluftstroms möglich und gegebenenfalls zweckdienlich. Je stärker der Eingangsluftstrom komprimiert wird, umso stärker steigt dessen Temperatur an und ermöglicht dadurch einen effizienten und kostengünstig durchführbaren Entzug von Wärme aus dem komprimierten Eingangsluftstrom.

Sowohl in dem Eingangsluftstrom oder in dem Feuchtluftstrom können jeweils Gebläse oder Ventilatoren angeordnet sein, die dazu dienen, die betreffende Luftströmung zu erzeugen und aufrechtzuerhalten. So kann beispielsweise mit einem Ventilator der Eingangsluftstrom aus der Umgebungsluft angesaugt werden und die Luftströmung des Eingangsluftstroms durch einen Eingangsluftströmungskanal bewirkt, bzw. aufrechterhalten werden. Insbesondere in einem geschlossenen Kreislauf für den Feuchtluftstrom kann es zweckmäßig sein, die Strömung des Feuchtluftstroms in dem Kreislauf mit Hilfe eines Ventilators oder eines Gebläses zu erzeugen und aufrechtzuerhalten.

Gemäß einer Ausgestaltung des Erfindungsgedankens ist vorgesehen, dass dem komprimierten Eingangsluftstrom mit einer ersten Wärmeübertragungsvorrichtung Wärme entzogen wird und die entzogene Wärme mit der ersten Wärmeübertragungsvorrichtung dem Feuchtluftstrom zugeführt wird, bevor der Feuchtluftstrom dem Sorptionselement zugeführt wird. Die durch die Abkühlung des komprimierten Eingangsluftstroms diesem entzogene Wärme kann in vorteilhafter Weise dazu verwendet werden, den Feuchtluftstrom zu erwärmen, bevor dieser dem Sorptionselement zugeführt wird. Dadurch kann der Anteil der extern zugeführten Energie reduziert werden, die für die Abkühlung des Eingangsluftstroms und für die Erwärmung des Feuchtluftstroms benötigt wird, und die Effizienz des erfindungsgemäßen Verfahrens gesteigert werden.

Optional ist vorgesehen, dass die Expansionsvorrichtung eine Expansionsmaschine mit einem Generator zur Gewinnung von elektrischer Energie während des Komprimierens des komprimierten Eingangsluftstroms aufweist. Auf diese Weise kann bei der Dekomprimierung und dem vorteilhaften Abkühlen des Eingangsluftstroms vor dem Sorptionselement elektrische Energie erzeugt werden, die beispielsweise für den Betrieb des Kompressors oder zur Unterstützung des Wärmeentzugs des Eingangsluftstroms oder der Kondensationsstufe für den Feuchtluftstrom verwendet werden kann. Es ist ebenfalls denkbar, dass eine kombinierte Kompressions- und Dekompressionsvorrichtung verwendet wird, mit welcher der Eingangsluftstrom zunächst komprimiert und anschließend wieder dekomprimiert wird, um dadurch den Anteil der für deren Betrieb notwendigen externen Energiezufuhr zu reduzieren.

Es hat sich als vorteilhaft herausgestellt, dass der Feuchtluftstrom in einem Kreislauf geführt wird. Gemäß einer vorteilhaften Ausgestaltung des Erfindungsgedankens ist vorgesehen, dass der Feuchtluftstrom in einem geschlossenen Kreislauf geführt wird. Hierbei wird dem Feuchtluftstrom kein zusätzlicher Luftstrom von außen zugeführt und der Feuchtluftstrom kann den geschlossenen Kreislauf nicht verlassen. Dadurch ist eine geeignete und präzise Konditionierung des Feuchtluftstroms in jedem Abschnitt innerhalb des geschlossenen Kreislaufs möglich.

Alternativ ist es denkbar, dass der Feuchtluftstrom in einem offenen Kreislauf geführt wird. Dabei kann dem Feuchtluftstrom ein Luftstromanteil von außen zugeführt werden oder ein Luftstromanteil des Feuchtluftstroms aus dem Kreislauf abgezweigt werden. Es ist ebenfalls denkbar, dass der Feuchtluftstrom nach einer Wassergewinnung abgeführt und ein neuer Feuchtluftstrom angesaugt wird.

Um die Wassermenge zu erhöhen, die dem Feuchtluftstrom entzogen wird, kann optional vorgesehen sein, dass der Feuchtluftstrom nach der ersten Kondensationsstufe durch eine zweite Kondensationsstufe geführt wird, die zusätzlich von einem Kühlfluidstrom durchströmt wird, um einen Kondensationsvorgang und die Gewinnung von Wasser aus dem Feuchtluftstrom zu unterstützen. Der Kühlfluidstrom kann gegebenenfalls aus der Umgebungsluft gewonnen werden, so dass lediglich eine ausreichende Strömung des Kühlfluidstroms in der zweiten Kondensationsstufe erzeugt werden muss und auf eine gesonderte Kühlung mit Hilfe eines Kühlmittels oder mit zusätzlicher Kühlungsenergie verzichtet werden kann. Der Kühlfluidstrom kann auch ein flüssiges oder gasförmiges Wärmeübertragungsmedium aufweisen, mit welchem eine effiziente Kühlung des Feuchtluftstroms in der zweiten Kondensationsstufe ermöglicht wird. Es ist ebenfalls möglich, dass mit einer Kühleinrichtung ohne einen Kühlfluidstrom eine Kühlung der zweiten Kondensationsstufe bewirkt wird, beispielsweise durch Verwendung von Peltier-Elementen. Durch die zusätzliche Kühlung in der zweiten Kondensationsstufe kann dem Feuchtluftstrom nach der ersten Kondensationsstufe zusätzlich Wasser entzogen werden.

Es ist ebenfalls denkbar, dass bereits die erste Kondensationsstufe beispielsweise durch einen Kühlfluidstrom gekühlt wird und dadurch die Effizienz der Wassergewinnung in der ersten Kondensationsstufe erhöht wird. Alternativ oder zusätzlich ist es zudem denkbar, dass in der ersten Kondensationsstufe mit einer geeigneten Wärmeübertragungsvorrichtung dem Feuchtluftstrom Wärme entzogen wird und die entzogene Wärme dem Feuchtluftstrom vor der Durchführung durch das Sorptionselement wieder zugeführt wird.

Im Hinblick auf eine weitere Steigerung der Effizienz ist gemäß einer vorteilhaften Ausgestaltung des erfindungsgemäßen Verfahrens vorgesehen, dass der Feuchtluftstrom vor der ersten Kondensationsstufe mit einem Kompressor mehr als 1,5-fach, vorzugsweise mehr als 1,7-fach und besonders vorzugsweise mehr als 2-fach komprimiert wird. Durch die Komprimierung des mit dem aus dem Sorptionselement aufgenommenen Wassers beladenen Feuchtluftstroms wird die absolute Feuchtigkeit des Feuchtluftstroms erhöht und dadurch die nachfolgende Wasserentnahme in der ersten Kondensationsstufe begünstigt. Die absolute Feuchtigkeit des Feuchtluftstroms ist definiert als das Verhältnis der tatsächlich in einer Luftvolumeneinheit enthaltenen Wasserdampfmasse zum Volumen der Luftvolumeneinheit. Die Komprimierung beeinflusst auch die relative Feuchtigkeit des Feuchtluftstroms, die definiert ist als das Verhältnis der absoluten Feuchtigkeit zu der maximalen Luftfeuchtigkeit des Feuchtluftstroms. Weiterhin wird durch die Komprimierung des Feuchtluftstroms auch die Taupunkttemperatur des Feuchtluftstroms verändert. Durch eine geeignete Vorgabe der Luftmenge des Feuchtluftstroms und dessen Komprimierung vor der ersten Kondensationsstufe kann eine sehr energieeffiziente Wassergewinnung aus dem Eingangsluftstrom bzw. üblicherweise aus der Umgebungsluft erreicht werden.

Der Eingangsluftstrom kann unmittelbar aus der Umgebungsluftstrom angesaugt werden. Der Eingangsluftstrom kann auch aus einem Abluftstrom oder aus einem Fortluftstrom einer Lüftungsanlage oder einer Luftkonditionsanlage stammen.

Gemäß einer vorteilhaften Ausgestaltung des Erfindungsgedankens weist der Feuchtluftstrom bei dem Durchströmen des Sorptionselements eine kleinere Luftmassenströmung als der Eingangsluftstrom auf. Vorzugsweise ist die Luftmassenströmung des Feuchtluftstroms bei dem Durchströmen des Sorptionselements kleiner als 50 % und besonders vorteilhaft kleiner als 20 % der Luftmassenströmung des durch das Sorptionselement durchgeführten Eingangsluftstroms. Auf diese Weise kann eine höhere relative Feuchtigkeit des Feuchtluftstroms im Vergleich zu der relativen Feuchtigkeit des Eingangsluftstroms erreicht werden, wodurch die Wassergewinnung begünstigt wird.

Die Erfindung betrifft auch eine Wassergewinnungsvorrichtung zur Gewinnung von Wasser aus einem Eingangsluftstrom mit einem Sorptionselement zur Sorption von Wasser aus dem Eingangsluftstrom und zur Abgabe von Wasser an einen ebenfalls durch das Sorptionselement geführten Feuchtluftstrom, wobei das Sorptionselement so angeordnet ist, dass es von dem Eingangsluftstrom und von dem Feuchtluftstrom durchströmt werden kann und das Sorptionselement Feuchtigkeit aus dem Eingangsluftstrom aufnimmt und an den das Sorptionselement durchströmenden Feuchtluftstrom abgibt, und mit einer ersten Kondensationsstufe, die einen ersten Kondensator zur Gewinnung von Wasser aus dem Feuchtluftstrom aufweist. Derartige Wassergewinnungsvorrichtungen sind aus dem eingangs bereits genannten Stand der Technik bekannt. Es hat sich gezeigt, dass ein wirtschaftlich sinnvoller Betrieb derartiger Wassergewinnungsvorrichtungen eine möglichst effiziente Wassergewinnung voraussetzt, mit welcher dem Eingangsluftstrom ein möglichst hoher Anteil des darin enthaltenen Wassers entzogen wird. Es wird deshalb als ein weiterer Aspekt der vorliegenden Erfindung angesehen, eine aus dem Stand der Technik bekannte Wassergewinnungsvorrichtung so weiterzuentwickeln, dass mit möglichst geringem Energieaufwand eine möglichst große Wassermenge aus dem Eingangsluftstrom entzogen werden kann.

Diese Aufgabe wird erfindungsgemäß dadurch gelöst, dass die Wassergewinnungsvorrichtung einen Kompressor aufweist, mit welchem der Eingangsluftstrom vor dem Durchströmen des Sorptionselements komprimiert werden kann, dass die Wassergewinnungsvorrichtung eine erste Wärmeübertragungseinrichtung aufweist, mit welcher dem komprimierten Eingangsluftstrom Wärme entzogen und der komprimierte Eingangsluftstrom dadurch abgekühlt werden kann, und dass die Wassergewinnungsvorrichtung eine Expansionsvorrichtung aufweist, mit welcher der komprimierte und abgekühlte Eingangsluftstrom dekomprimiert werden kann, bevor er das Sorptionselement durchströmt. Durch die Komprimierung und anschließende Dekomprimierung des Eingangsluftstroms kann mit vergleichsweise geringem Energieaufwand eine starke Abkühlung des Eingangsluftstroms bis auf eine Temperatur deutlich unterhalb der Temperatur des Eingangsluftstroms vor der Komprimierung mit dem Kompressor bewirkt werden. Der Nachteil eines für den Betrieb des Kompressors und der Expansionsvorrichtung erforderlichen zusätzlichen Energieaufwands kann dabei erheblich geringer sein als der Vorteil einer zusätzlichen Steigerung der Effizienz bei der Wassergewinnung aus dem Eingangsluftstrom. Die Energiebilanz und die Effizienz einer derart ausgestalteten Wassergewinnungsvorrichtung können im Vergleich mit den herkömmlichen und aus dem Stand der Technik bekannten Wassergewinnungsvorrichtungen deutlich gesteigert werden.

Optional ist vorgesehen, dass der Kompressor so ausgestaltet ist, dass der Eingangsluftstrom mit dem Kompressor auf einen Druck von mehr als dem 1,5-fachen, vorzugsweise von mehr als dem 1,7-fachen und besonders vorzugsweise von mehr als dem 2-fachen des Drucks des Eingangsluftstroms vor dem Komprimieren verdichtet werden kann. In vielen Fällen und insbesondere bei einem Betrieb der Wassergewinnungsvorrichtung in einer Region, in welcher kostengünstig eine externe Energiezufuhr beispielsweise über Solarenergie zur Verfügung steht, kann der für eine stärkere Komprimierung des Eingangsluftstroms erforderliche zusätzliche Energieaufwand durch einen dadurch erleichterten Wärmeentzug mit der ersten Wärmeübertragungseinrichtung und eine stärkere Abkühlung des Eingangsluftstroms vor dem Durchströmen des Sorptionselements mehr als kompensiert werden. Dadurch können die Effizienz und Energiebilanz der Wassergewinnungsvorrichtung insgesamt verbessert werden.

Die Energiebilanz kann optional dadurch weiter verbessert werden, dass die Expansionsvorrichtung eine Expansionsmaschine mit einem Generator zur Gewinnung von elektrischer Energie während des Komprimierens des komprimierten Eingangsluftstroms aufweist. Der Generator kann mit der Druckarbeit betrieben werden, die der komprimierte Eingangsluftstrom bei dem Dekomprimieren in der Expansionsmaschine verrichten kann. Auf diese Weise wird die ansonsten nicht mehr nutzbare Druckenergie des komprimierten Eingangsluftstroms zur Erzeugung von elektrischer Energie verwendet, die beispielsweise für den Betrieb des Kompressors oder der ersten Wärmeübertragungseinrichtung oder auch der ersten Kondensationsstufe sinnvoll eingesetzt werden kann.

Die erste Wärmeübertragungseinrichtung ist gemäß einer vorteilhaften Ausgestaltung des Erfindungsgedankens so angeordnet, dass Wärme dem komprimierten Eingangsluftstrom entzogen und dem Feuchtluftstrom vor dem Durchströmen des Sorptionselements zugeführt werden kann. Die dem komprimierten Eingangsluftstrom zu dessen Kühlung entzogene Wärme kann dadurch in vorteilhafter Weise ohne zusätzliche Umwandlungsschritte in andere Energieformen dafür verwendet werden, den Feuchtluftstrom vor dem Durchströmen des Sorptionselements zu erwärmen und auf diese Weise den Anteil des Wassers erhöhen, der von dem Feuchtluftstrom aus dem Sorptionselement aufgenommen werden kann.

Gemäß einer vorteilhaften Ausgestaltung des Erfindungsgedankens ist vorgesehen, dass die Wassergewinnungsvorrichtung eine zweite Wärmeübertragungsvorrichtung aufweist, mit welcher dem Feuchtluftstrom in der ersten Kondensationsstufe Wärme entzogen und vor dem Durchströmen des Sorptionselements zugeführt werden kann. Auf diese Weise wird die Wassergewinnung in der ersten Kondensationsstufe unterstützt und gleichzeitig der Feuchtluftstrom in vorteilhafter Weise vor dem Durchströmen des Sorptionselements zusätzlich erwärmt.

Optional kann vorgesehen sein, dass die Wassergewinnungsvorrichtung eine zweite Kondensationsstufe für den Feuchtluftstrom mit einem zweiten Kondensator aufweist, der beispielsweise von einem Kühlfluidstrom gekühlt werden kann, um einen Kondensationsvorgang des Feuchtluftstroms in dem zweiten Kondensator zu unterstützen. Mit Hilfe einer zusätzlichen Kühlung kann dem Feuchtluftstrom auch nach der ersten Kondensationsstufe in einer nachfolgend angeordneten zweiten Kondensationsstufe nochmals Wasser entzogen werden. In der zweiten Kondensationsstufe kann der zweite Kondensator nicht nur mit Hilfe eines Kühlfluidstroms gekühlt werden, sondern beispielsweise auch mit einer zusätzlichen Kühleinrichtung, für deren Betrieb externe Energie verwendet wird. Dies ist insbesondere bei einem Betrieb der Wassergewinnungsvorrichtung in einer Region vorteilhaft, in der beispielsweise auf Grund einer hohen Sonneneinstrahlung elektrische Solarenergie kostengünstig generiert und zur Verfügung gestellt werden kann.

Gemäß einer besonders vorteilhaften Ausgestaltung des Erfindungsgedankens ist vorgesehen, dass das Sorptionselement ein drehbar gelagertes Sorptionsrad ist. Für den Betrieb des drehbar gelagerten Sorptionsrads ist lediglich eine geringe Antriebsenergie erforderlich. Die Abmessungen des Sorptionsrads und insbesondere dessen Durchmesser und Dicke können an die jeweilige Luftstromvolumina und Luftmassenströmungen des Eingangsluftstroms und des Feuchtluftstroms angepasst sein.

Nachfolgend werden exemplarische Ausführungsbeispiele des Erfindungsgedankens näher erläutert, die schematisch in der Zeichnung dargestellt sind. Es zeigt:
Fig. 1 eine schematische Darstellung eines erfindungsgemäßen Verfahrensablaufs sowie der wesentlichen Komponenten einer erfindungsgemäßen Wassergewinnungsvorrichtung, mit welcher Wasser aus einem Eingangsluftstrom entzogen und gewonnen werden kann und
Fig. 2 eine abweichende Ausgestaltung des erfindungsgemäßen Verfahrens sowie der erfindungsgemäßen Wassergewinnungsvorrichtung, wobei mit zusätzlichen Komponenten und Verfahrensschritten die Effizienz der Wassergewinnung gesteigert werden kann.

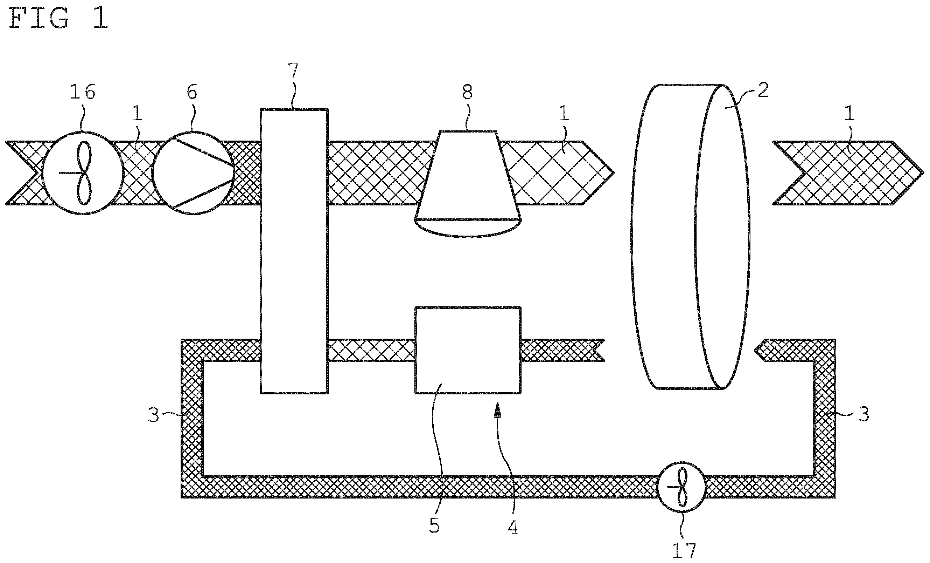

Bei dem in Fig. 1 dargestellten Ausführungsbeispiel wird ein beispielsweise aus der Umgebung angesaugter Eingangsluftstrom 1 durch ein als Sorptionsrad ausgeführtes Sorptionselement 2 hindurchgeführt, wobei das Sorptionselement 2 Feuchtigkeit aus dem Eingangsluftstrom 1 aufnimmt. Getrennt von dem Eingangsluftstrom 1 wird ein Feuchtluftstrom 3 in einem geschlossenen Kreislauf geführt und dabei ebenfalls durch das Sorptionselement 2 hindurchgeführt. Dabei wird der Feuchtluftstrom 3 so durch das Sorptionselement 2 hindurchgeführt, dass der Feuchtluftstrom 3 die dem Eingangsluftstrom 1 entzogene Wassermenge aus dem Sorptionselement 2 wieder aufnimmt. Dabei sind der Eingangsluftstrom 1 und der Feuchtluftstrom 3 so vorgegeben und konditioniert, dass der Feuchtluftstrom 3 bei dem Durchströmen des Sorptionselements 2 eine deutlich kleinere Luftmassenströmung als der Eingangsluftstrom 1 bei dem Durchströmen des Sorptionselements 2 aufweist, so dass der absolute Feuchtegehalt des Feuchtluftstroms 3 höher als der absolute Feuchtegehalt des Eingangsluftstroms 1 ist. Der Feuchtluftstrom 3 wird nach dem Durchströmen des Sorptionselements 2 einer ersten Kondensationsstufe 4 mit einem ersten Kondensator 5 zugeführt, mit welchem dem Feuchtluftstrom 3 Feuchtigkeit entzogen und dadurch Wasser gewonnen wird.

Es hat sich gezeigt, dass die Effizienz der Wassergewinnung bei einem derartigen Verfahren dadurch erheblich gesteigert werden kann, dass der Eingangsluftstrom 1 vor dem Durchströmen des Sorptionselements 2 abgekühlt wird. Um diese Abkühlung des Eingangsluftstroms 1 unterhalb einer Eingangstemperatur des üblicherweise aus der Umgebung angesaugten Eingangsluftstroms 1 in einer besonders energieeffizienten Art und Weise zu ermöglichen wird der Eingangsluftstrom 1 zunächst einem Kompressor 6 zugeführt und dabei vorzugsweise auf einen Druck von mehr als dem 1,5-fachen oder mehr als dem 2-fachen eines Eingangsdrucks des angesaugten und noch nicht komprimierten Eingangsluftstroms 1 komprimiert. Durch die Komprimierung wird die Temperatur des Eingangsluftstroms erhöht und ist demzufolge höher als eine Eingangstemperatur des angesaugten und noch nicht komprimierten Eingangsluftstroms 1. Bei der schematischen Darstellung des in Fig. 1 gezeigten Ausführungsbeispiels wird eine höhere Temperatur des Eingangsluftstroms 1 oder des Feuchtluftstroms 3 durch eine engere Schraffur des Eingangsluftstroms 1 oder des Feuchtluftstroms 3 veranschaulicht.

Der komprimierte und dadurch erwärmte Eingangsluftstrom 1 wird nach dem Kompressor 6 einer ersten Wärmeübertragungseinrichtung 7 zugeführt. Mit der ersten Wärmeübertragungseinrichtung 7 wird dem komprimierten und erwärmten Eingangsluftstrom 1 Wärme entzogen und der Eingangsluftstrom 1 dadurch abgekühlt. In Abhängigkeit von der Ausgestaltung der ersten Wärmeübertragungseinrichtung 7 kann der komprimierte Eingangsluftstrom 1 auf einen Temperaturwert abgekühlt werden, der näherungsweise der Eingangstemperatur des Eingangsluftstroms 1 vor der Komprimierung entspricht.

Anschließend wird der komprimierte und abgekühlte Eingangsluftstrom 1 einer Expansionsvorrichtung 8 zugeführt und wieder dekomprimiert. Dadurch wird der durch die erste Wärmeübertragungseinrichtung 7 bereits abgekühlte Eingangsluftstrom 1 zusätzlich abgekühlt, und zwar auf einen Temperaturwert, der unterhalb der Eingangstemperatur des noch nicht komprimierten Eingangsluftstroms 1 liegt. Auf diese Weise kann erreicht werden, dass eine besonders große Feuchtigkeitsmenge aus dem dekomprimierten und stark abgekühlten Eingangsluftstrom 1 von dem Sorptionselement 2 aufgenommen und absorbiert wird.

Die Expansionsvorrichtung 8 kann als eine Expansionsmaschine mit einem Generator zur Gewinnung von elektrischer Energie ausgestaltet sein. Die bei der Dekomprimierung des Eingangsluftstroms 1 erzeugte elektrische Energie kann zum Betrieb des Kompressors 6 oder zur Unterstützung der ersten Wärmeübertragungseinrichtung 7 verwendet werden.

Die erste Wärmeübertragungseinrichtung 7 ist so angeordnet und ausgebildet, dass nicht nur dem komprimierten und erwärmten Eingangsluftstrom 1 Wärme entzogen werden kann, sondern gleichzeitig auch die dem Eingangsluftstrom 1 entzogene Wärme dem Feuchtluftstrom 3 wieder zugeführt werden kann, bevor der Feuchtluftstrom 3 durch das Sorptionselement 2 hindurchgeführt wird. Auf diese Weise wird der in dem ersten Kondensator 5 der ersten Kondensationsstufe 4 abgekühlte Feuchtluftstrom 3 wieder erwärmt, um in dem Sorptionselement 2 eine möglichst große Feuchtigkeitsmenge aufnehmen und der ersten Kondensationsstufe 4 zuführen zu können.

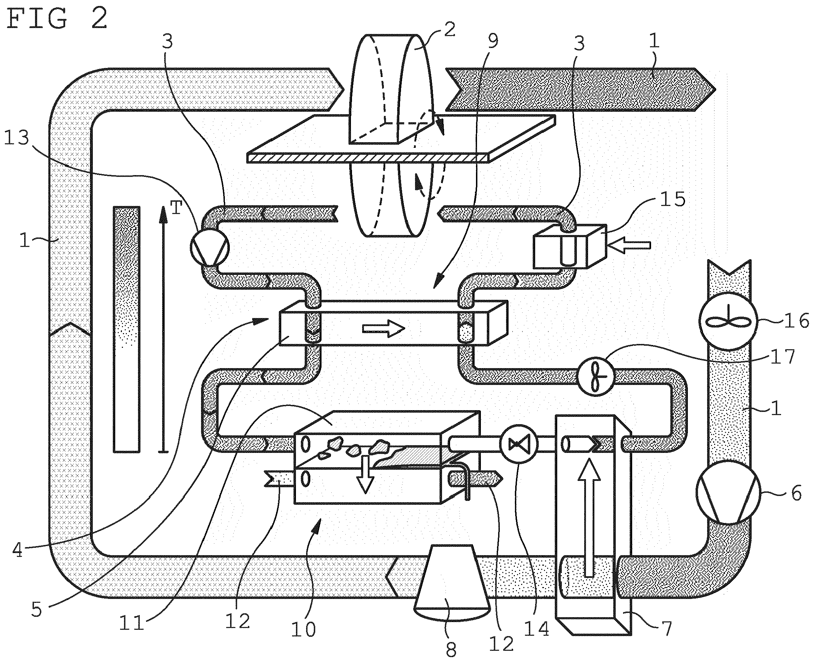

Bei dem in der Fig. 2 schematisch dargestellten Verfahrensablauf bzw. bei der hierfür verwendeten Wassergewinnungsvorrichtung sind zusätzlich weitere Komponenten entlang des in einem geschlossenen Kreislauf geführten Feuchtluftstroms 3 angeordnet. Die erste Kondensationsstufe 4 weist eine zweite Wärmeübertragungseinrichtung 9 auf. Die zweite Wärmeübertragungseinrichtung 9 ist so angeordnet und ausgestaltet, dass eine dem Feuchtluftstrom 3 in der ersten Kondensationsstufe 4 entnommene Wärmemenge dem Feuchtluftstrom 3 vor seiner Zuführung zu dem Sorptionselement 2 wieder zugeführt und der Feuchtluftstrom 3 vor dem Eintritt in das Sorptionselement 2 zusätzlich erwärmt wird. Nach der ersten Kondensationsstufe 4 kann im weiteren Verlauf des geschlossenen Kreislaufes des Feuchtluftstroms 3 eine zweite Kondensationsstufe 10 mit einem zweiten Kondensator 11 angeordnet sein. Der zweite Kondensator 11 kann durch eine geeignete Kühleinrichtung gekühlt werden. In dem dargestellten Ausführungsbeispiel wird der zweite Kondensator 11 durch einen Kühlfluidstrom 12 gekühlt, der durch die zweite Kondensationsstufe 10 hindurchgeführt wird. Bei dem Kühlfluidstrom 12 kann es sich beispielsweise um angesaugte Umgebungsluft handeln.

Um die Kondensation von Feuchtigkeit aus dem Feuchtluftstrom 3 in der ersten Kondensationsstufe 4 und in der zweiten Kondensationsstufe 10 zu begünstigen ist vor der ersten Kondensationsstufe 4 ein zweiter Kompressor 13 angeordnet, mit welchem der Feuchtluftstrom 3 komprimiert und dadurch zusätzlich erwärmt wird. Auf diese Weise kann die Wassergewinnung in der ersten Kondensationsstufe 1 sowie der mit der zweiten Wärmeübertragungseinrichtung 9 bewirkte Wärmeübertrag von der ersten Kondensationsstufe 4 zu dem Feuchtluftstrom 3 vor dessen Durchströmen des Sorptionselements 2 verstärkt und unterstützt werden. Zudem kann auch die Wassergewinnung in der zweiten Kondensationsstufe 10 unterstützt und erhöht werden. Im Anschluss daran wird der Feuchtluftstrom 3 durch eine zweite Expansionsvorrichtung 14 hindurchgeführt und wieder dekomprimiert. Die zweite Expansionsvorrichtung 14 könnte auch zwischen der ersten Kondensationsstufe 4 und der zweiten Kondensationsstufe 10 oder aber nach der ersten Wärmeübertragungseinrichtung 7 innerhalb des Kreislaufes des Feuchtluftstroms 3 angeordnet sein.

Falls eine zusätzliche Erwärmung des Feuchtluftstroms 3 vor dessen Durchführung durch Sorptionselement 2 vorteilhaft ist und dadurch die Effizienz der Wassergewinnung gesteigert werden kann, kann unmittelbar vor dem Sorptionselement 2 eine gesonderte Wärmezufuhreinrichtung 15 in dem Kreislauf des Feuchtluftstroms 3 angeordnet werden. Die Wärmezufuhreinrichtung 15 kann mit externer Energie betrieben werden und den Feuchtluftstrom 3 zusätzlich erhitzen. Die für den Betrieb des ersten Kompressors 6 sowie für den gegebenenfalls vorhandenen zweiten Kompressor und die gegebenenfalls vorhandene Wärmezufuhreinrichtung 15 benötigte Energie kann beispielsweise mit dem elektrischen Generator der Expansionsvorrichtung 8 erzeugt oder zumindest anteilig bereitgestellt werden.

Bei beiden Ausführungsbeispielen wird der Eingangsluftstrom 1 mit Hilfe eines ersten Ventilators 16 oder eines vergleichbaren Gebläses aus der Umgebungsluft angesaugt. Mit Hilfe des ersten Ventilators 16 wird auch die Luftströmung des Eingangsluftstroms durch den Kondensator 6, durch die erste Wärmeübertragungseinrichtung 7, durch die Expansionsvorrichtung 8 und durch das Sorptionselement 2 bewirkt und aufrechterhalten. Ebenso wird mit einem zweiten Ventilator 17 die Luftströmung des Feuchtluftstroms 3 innerhalb des geschlossenen Kreislaufs bewirkt und aufrechterhalten. Sofern durch den Kompressor 6 der Eingangsluftstrom 1 angesaugt und dessen Luftströmung bis durch das Sorptionselement 2 aufrechterhalten werden kann, kann auf einen gesonderten ersten Ventilator 16 verzichtet werden. In gleicher Weise könnte auch in dem Feuchtluftstrom 3 auf einen zweiten Ventilator 17 verzichtet werden, falls mit dem in dem zweiten Ausführungsbeispiel gemäß Figur 2 in dem Feuchtluftstrom 3 angeordneten zweiten Kompressor 13 eine ausreichende Luftströmung für den Feuchtluftstrom 3 in dem geschlossenen Kreislauf erzeugt und aufrechterhalten werden kann.

## Patentansprüche

1. Verfahren zum Gewinnen von Wasser aus einem Eingangsluftstrom (1), wobei der Eingangsluftstrom (1) und ein Feuchtluftstrom (3) durch ein Sorptionselement (2) zur Sorption von Wasser aus dem Eingangsluftstrom (1) geführt werden, wobei das Sorptionselement (2) Feuchtigkeit aus dem Eingangsluftstrom (1) aufnimmt und an den das Sorptionselement (2) durchströmenden Feuchtluftstrom (3) abgibt, und wobei der Feuchtluftstrom (3) nach dem Sorptionselement (2) durch eine erste Kondensationsstufe (4) geführt wird, mit welcher Wasser aus dem Feuchtluftstrom (3) entzogen wird, **dadurch gekennzeichnet, dass** der Eingangsluftstrom (1) vor dem Durchströmen des Sorptionselements (2) mit einem Kompressor (6) komprimiert wird, dass dem komprimierten Eingangsluftstrom (1) Wärme entzogen und der komprimierte Eingangsluftstrom (1) dadurch abgekühlt wird, und dass der komprimierte abgekühlte Eingangsluftstrom (1) mit einer Expansionsvorrichtung (8) dekomprimiert wird, bevor er das Sorptionselement (2) durchströmt.

2. Verfahren nach Anspruch 1, **dadurch gekennzeichnet, dass** der komprimierte Eingangsluftstrom (1) mit der Expansionsvorrichtung (8) so dekomprimiert wird, dass der Druck des dekomprimierten Eingangsluftstrom (1) nicht größer als der Druck des Eingangsluftstroms (1) vor dem Komprimieren mit dem Kompressor (6) ist.

3. Verfahren nach Anspruch 1 oder Anspruch 2, **dadurch gekennzeichnet, dass** der Eingangsluftstrom (1) mit dem Kompressor (6) auf einen Druck von mehr als dem 1,5-fachen, vorzugsweise von mehr als dem 1,7-fachen und besonders vorzugsweise von mehr als dem 2-fachen des Drucks des Eingangsluftstroms (1) vor dem Komprimieren komprimiert wird.

4. Verfahren nach einem der vorangehenden Ansprüche, **dadurch gekennzeichnet, dass** dem komprimierten Eingangsluftstrom (1) mit einer ersten Wärmeübertragungsvorrichtung (7) Wärme entzogen wird und die entzogene Wärme mit der Wärmeübertragungsvorrichtung (7) dem Feuchtluftstrom (3) zugeführt wird, bevor der Feuchtluftstrom (3) dem Sorptionselement (2) zugeführt wird.

5. Verfahren nach einem der vorangehenden Ansprüche, **dadurch gekennzeichnet, dass** die Expansionsvorrichtung (8) eine Expansionsmaschine mit einem Generator zur Gewinnung von elektrischer Energie während des Dekomprimierens des komprimierten Eingangsluftstroms (1) aufweist.

6. Verfahren nach einem der vorangehenden Ansprüche, **dadurch gekennzeichnet, dass** der Feuchtluftstrom (3) in einem geschlossenen Kreislauf geführt wird.

7. Verfahren nach einem der vorangehenden Ansprüche, **dadurch gekennzeichnet, dass** der Feuchtluftstrom (3) nach der ersten Kondensationsstufe (4) durch eine zweite Kondensationsstufe (10) geführt wird, die zusätzlich von einem Kühlfluidstrom (12) durchströmt wird, um einen Kondensationsvorgang und die Gewinnung von Wasser aus dem Feuchtluftstrom (3) zu unterstützen.

8. Verfahren nach einem der vorangehenden Ansprüche, **dadurch gekennzeichnet, dass** der Feuchtluftstrom (3) vor der ersten Kondensationsstufe (4) mit einem Kompressor (13) mehr als 1,5-fach, vorzugsweise mehr als 1,7-fach und besonders vorzugsweise mehr als 2-fach komprimiert wird.

9. Verfahren nach einem der vorangehenden Ansprüche, **dadurch gekennzeichnet, dass** der Feuchtluftstrom (3) bei dem Durchströmen des Sorptionselements (2) eine kleinere Luftmassenströmung als der Eingangsluftstrom (1) bei dem Durchströmen des Sorptionselements (2) aufweist, vorzugsweise weniger als 50% der Luftmassenströmung und besonders vorzugsweise weniger als 20% der Luftmassenströmung des Eingangsluftstroms (1) bei dem Durchströmen des Sorptionselements (2) aufweist.

10. Wassergewinnungsvorrichtung zur Gewinnung von Wasser aus einem Eingangsluftstrom (1), mit einem Sorptionselement (2) zur Sorption von Wasser aus dem Eingangsluftstrom (1) und zur Abgabe von Wasser an einen ebenfalls durch das Sorptionselement (2) geführten Feuchtluftstrom (3), wobei das Sorptionselement (2) so angeordnet ist, dass es von dem Eingangsluftstrom (1) und von dem Feuchtluftstrom (3) durchströmt werden kann und das Sorptionselement (2) Feuchtigkeit aus dem Eingangsluftstrom (1) aufnimmt und an den das Sorptionselement (2) durchströmenden Feuchtluftstrom (3) abgibt, und mit einer ersten Kondensationsstufe (4), die einen ersten Kondensator (5) zur Gewinnung von Wasser aus dem Feuchtluftstrom (3) aufweist, **dadurch gekennzeichnet, dass** die Wassergewinnungsvorrichtung einen Kompressor (6) aufweist, mit welchem der Eingangsluftstrom (1) vor dem Durchströmen des Sorptionselements (2) komprimiert werden kann, dass die Wassergewinnungsvorrichtung eine erste Wärmeübertragungseinrichtung (7) aufweist, mit welcher dem komprimierten Eingangsluftstrom (1) Wärme entzogen und der komprimierte Eingangsluftstrom (1) dadurch abgekühlt werden kann, und dass die Wassergewinnungsvorrichtung eine Expansionsvorrichtung (8) aufweist, mit welcher der komprimierte abgekühlte Eingangsluftstrom (1) dekomprimiert werden kann.

11. Wassergewinnungsvorrichtung nach Anspruch 10, **dadurch gekennzeichnet, dass** der Kompressor (6) so ausgestaltet ist, dass der Eingangsluftstrom (1) mit dem Kompressor (6) auf einen Druck von mehr als dem 1,5-fachen, vorzugsweise von mehr als dem 1,7-fachen und besonders vorzugsweise von mehr als dem 2-fachen des Drucks des Eingangsluftstroms (1) vor dem Komprimieren komprimiert werden kann.

12. Wassergewinnungsvorrichtung nach Anspruch 10 oder Anspruch 11, **dadurch gekennzeichnet, dass** die Expansionsvorrichtung (8) eine Expansionsmaschine mit einem Generator zur Gewinnung von elektrischer Energie während des Dekomprimierens des komprimierten Eingangsluftstroms (1) aufweist.

13. Wassergewinnungsvorrichtung nach einem der Ansprüche 10 bis 12, **dadurch gekennzeichnet, dass** die Wärmeübertragungseinrichtung (7) so angeordnet ist, dass Wärme dem komprimierten Eingangsluftstrom (1) entzogen und dem Feuchtluftstrom (3) vor dem Durchströmen des Sorptionselements (2) zugeführt werden kann.

14. Wassergewinnungsvorrichtung nach einem der Ansprüche 10 bis 13, **dadurch gekennzeichnet, dass** die Wassergewinnungsvorrichtung eine zweite Wärmeübertragungsvorrichtung (9) aufweist, mit welcher dem Feuchtluftstrom (3) in der ersten Kondensationsstufe (4) Wärme entzogen und vor dem Durchströmen des Sorptionselements (2) zugeführt werden kann.

15. Wassergewinnungsvorrichtung nach einem der Ansprüche 10 bis 14, **dadurch gekennzeichnet, dass** die Wassergewinnungsvorrichtung eine zweite Kondensationsstufe (10) für den Feuchtluftstrom (3) mit einem zweiten Kondensator (11) aufweist, der von einem Kühlfluidstrom gekühlt werden kann, um einen Kondensationsvorgang des Feuchtluftstroms (3) in dem zweiten Kondensator (11) zu unterstützen.

16. Wassergewinnungsvorrichtung nach einem der Ansprüche 10 bis 15, **dadurch gekennzeichnet, dass** das Sorptionselement (2) ein drehbar gelagertes Sorptionsrad ist.
